# EUROPEAN PATENT SPECIFICATION

(11) **EP 1 166 190 B1**
(45) Date of publication and mention of the grant of the patent: **24.05.2006**
(21) Application number: 00917098.6
(22) Date of filing: 31.03.2000
(51) Int. Cl.: G05B 19/418, G06Q 10/00

(54) **MAINTENANCE MANAGEMENT SYSTEM FOR A PRODUCTION PLANT**
MANAGEMENTSYSTEM ZUR BETRIEBSUNTERHALTUNG EINER PRODUKTIONSANLAGE
SYSTEME DE GESTION DE LA MAINTENANCE DESTINE A UNE USINE DE PRODUCTION

(30) Priority: 31.03.1999 FI 990715
(43) Date of publication of application: 02.01.2002
(73) Proprietor: Metso Paper, Inc., 00130 Helsinki (FI)
(72) Inventor: MÄKI, Kari, M., FIN-40250 Jyväskylä (FI)
(74) Representative: TBK-Patent
(86) International application number: PCT/FI2000/000283
(87) International publication number: WO 2000/062138

(56) References cited:
- EP-A2- 0 822 473
- EP-A2- 0 825 506
- EP-B1- 0 645 028
- US-A- 5 909 493

## Description

The invention relates to a maintenance management method and system for a production plant.

The invention is related to the maintenance management of a production plant by virtue of bidirectional transfer of information between the production plant and a remotely located service unit responsible for service operations in order to provide information exchange for service and maintenance. In the present application, the term production plant is understood to refer to paper mills, board mills, pulp production plants, paper finishing plants and the like installations related to the manufacture/conversion of paper/board.

Conventionally, the servicing of paper/boardmaking machines and the like is based on separate machine analyses, condition tests and service packages, as well as service agreements based thereon, all of these aiming to minimize the occurrence of fault and disturbance factors in production plants. During malfunction situations, additional servicing operations are launched as necessary. The service unit may also perform continuous data logging on the condition of the production plant. This kind of information may be submitted from the production plant to the service unit in printed or electrical form, for instance.

In a more advanced format, information can be transferred between the production plant and the service unit using a so-called remote terminal connection such as that described in a magazine titled Kunnossapito (in English: Maintenance), Vol. 6/98. Via established remote terminal connection, the service unit can examine the views displayed on the paper-making machine information system in the same format as they are actually seen in the control room of the machinery. Typical target applications of a remote terminal connection are such as a process control and condition monitoring system. Over remote terminal connection, the personnel of the production plant can have a simultaneous telephone connection to the service personnel, which assists in providing an efficient and fast solution to problematic situations.

Although a remote terminal connection can improve the efficiency of service management, its technical implementation is complicated. To facilitate remote servicing, the service unit must have a separate user interface to each one of the monitored information systems. With the increasing complexity of automation in papermaking machines and the like, the number of installed measurement and information systems increases respectively, which imposes more demands to the performance level of a remote terminal connection. Moreover, different production plants have varied types of systems, which further complicates the operating environment.

At to the state of the art, reference is made to US Pat. No. 5,844,601, wherein is described the communication between a production plant and a service center over audio and video connections. In this arrangement, the information gathering about the plant takes place by means of portable or fixed video cameras and earphone-microphone headsets that can be taken to desired areas around the plant. Within the plant area, video and audio signals are transmitted over an RF path to the regional service units and, therefrom, to the central service unit of the plant. From the base unit, the video and audio signals are transmitted to a remote service center using an ISDN connection or other communications facility.

In the transfer of information from a production unit to a service unit, the basic requirements are uncompromised confidentiality and data security. The service unit collects data and different key figures from a plurality of production plants, processes the data and returns each production plant feedback data and reference information. The data being gathered may be, e.g., production figures, fault and disturbance information, process values, paper web profiles, etc. When comparative reference data to be submitted back to the plants is processed, the names of the different production plants are eliminated from the produced data. The automation and maintenance systems of papermaking plants and the like also contain such data that is not desired to be submitted to the service unit. An example is the composition of paste. Frequently, the management system of a production plant contains information from a plurality of production lines, whereby it is necessary to border the access rights of a service unit to cover only the information related to the line concerned in the service contract activity.

The EP-A-0 822 473 discloses a remote maintenance system for maintaining an industrial equipment installed at a remote location. Factories comprise host computers for monitoring industrial equipments. Each host computer is connected to a management host computer on a vendor side through the Internet. The host computer on the factory side detects occurrence of a trouble of the industrial equipment and notifies the vendor side of status information representing a trouble state. In response to this, the host computer on the vendor side notifies the factory side of response information representing a countermeasure against the trouble state. Moreover, the host computer identifies and manages the plurality of industrial equipments and obtains the status information about the operating state of an industrial equipment in trouble and informs the vendor side of this status information through the Internet. Each industrial equipment has a function of notifying the corresponding host computer of the presence/absence of a trouble in response to a request from the host computer and a function of specifying the contents of the trouble and notifying the host computer of the status information representing the specified contents.

It is an object of the present invention to provide a method and system for information transfer between a production plant and a service unit so that the information to be transferred is transmitted in format secured against access by unauthorized parties.

It is a further object of the invention to provide a method and system capable of transferring data, audio and video signals for the purpose of enhanced service function.

It is another further object of the invention to provide a method and system offering flexible service scheduling.

It is still another further object of the invention to provide a method and system facilitating special measurements to be launched from the service unit in problem-solving situations, for instance.

According to the present invention, these objects are achieved by a method according to claim 1 and a system according to claim 8.

According to the invention, information is transferred between a production plant and a service unit via the Internet in a manner secured against access by unauthorized parties. The protection of data is implemented by means of the so-called firewall technique. A firewall serves to block unauthorized communication and enables authorized communication between a local information network and the Internet. Secured communications over the Internet can be assured, e.g., utilizing data transfer services offered by telecom network operators. With the help of a firewall and the data communications services, it is possible to establish a monitored gateway over which all communications over the interconnected networks take place. In the arrangement according to the invention, the firewall is located both between the information network of the service unit and the Internet and between the local information network of the production plant and the Internet. The communications channel connecting the service unit to the production plant is established between these firewalls. When necessary, a firewall may also be provided to protect a smaller subnetwork or unit. The authorized users of a protected network are identified at the firewall by their computer IP addresses. These protective measures are complemented with user ID codes and passwords.

Information transfer in the arrangement according to the invention takes place from the production plant's information systems either directly to a service unit or, alternatively, information in the production plant is gathered in a centralized manner to a service system server, wherefrom the data is transferred to the service unit.

The novel communications connection by virtue of the invention between a papermaking production plant or the like and a service providing unit facilitates a plurality of novel approaches to the implementation of maintenance and servicing activities. For instance, continuous data collection from the operation of a production plant gives enhanced possibilities of anticipating future needs of servicing. In certain situations, the scheduled maintenance periods may be extended when the units of machinery exhibit continuous operation without any signs of malfunction. Resultingly, the client can enjoy significant cost savings. Another situation may involve emerging malfunctions that may be anticipated and the service required thereby can be timed as preventive maintenance. These actions counteract long shutdowns of production due to fault situations and allow servicing and spare parts installations to be carried out before actual malfunction has occurred.

In the arrangement according to the invention, the information transmission draws upon the data transfer facilities offered by various telecom network operators for transferring data over the Internet, whereby substantially large amounts of information can be transmitted in a short time. Along with the transmission of numerical and textual data, it is also possible to transfer video and audio signals. These facilities are employed to support information gathering in a production plant particularly during a fault situation. The communications connection established in accordance with the invention also permits special measurements to be launched remotely from the service unit. Furthermore, it is possible to give the production plant's control room personnel recommendations on control of machinery over the communications connection established according to the invention.

In the following the invention will be described in detail with reference of the figures in the accompanying drawing, the invention being however by no means strictly confined to the details of said embodiments or variations.
FIG. 1 shows a diagram illustrating a maintenance arrangement according to the prior art.
FIG. 2 shows a diagram illustrating a maintenance arrangement according to the invention between a production plant and a service unit.
FIG. 3 shows a diagram illustrating a maintenance system having a single service unit connected to a plurality of production plants using a communications connection according to the invention.

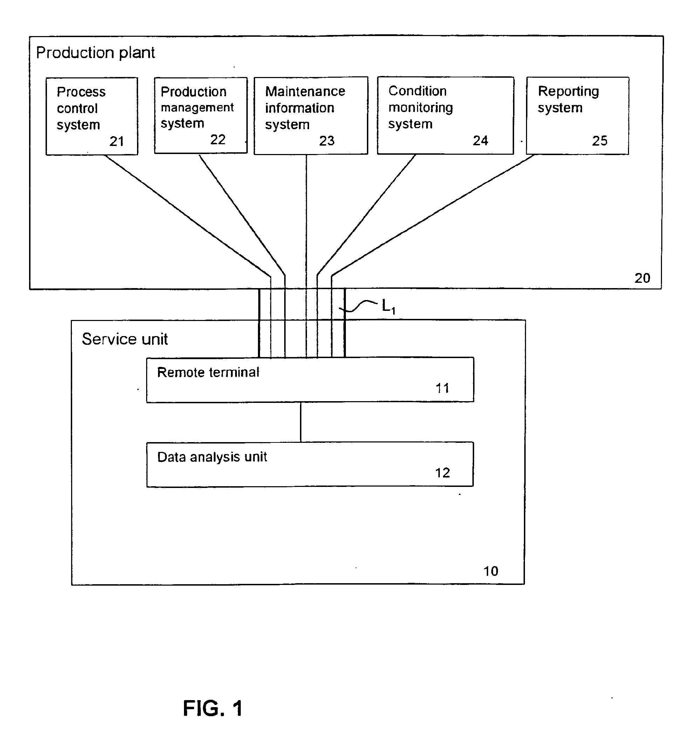

Referring to FIG. 1, therein is shown a prior-art scheme of maintenance system organization between a production plant 20 and a service unit 10. The production plant 20 may be a paper mill, board mill, pulp production plant, paper finishing plant or the like plant related to the manufacture/conversion of paper/board or some other kind of production plant.

The process performed in the production plant 20 comprise a highly automated process which is supervised and controlled via the internal information systems of the production plant 20. Such information systems include, e.g., a process control system 21, a production management system 22, a maintenance information system 23, a condition monitoring system 24 and a reporting system 25.

The service unit 10 is provided with a remote terminal connection to the information systems 21, 22, 23, 24, 25 of the production plant 20. From these information systems 21, 22, 23, 24, 25, the information is passed to a remote terminal unit 11 of the service unit 10 over a line L₁ that may be an ISDN connection, for instance. The remote terminal unit 11 contains a user interface for any one of the information systems 21, 22, 23, 24, 25 connected thereto, whereby the remote terminal unit 11 can be used for controlling these information systems in the same fashion as is done on site in the production plant 20. From the remote terminal unit 11, desired information can be transferred to a data analysis unit 12, wherein data obtained from the production plant 20 is analyzed and formed into a desired information format and reports to be utilized both by the service unit 10 and the production plant 20.

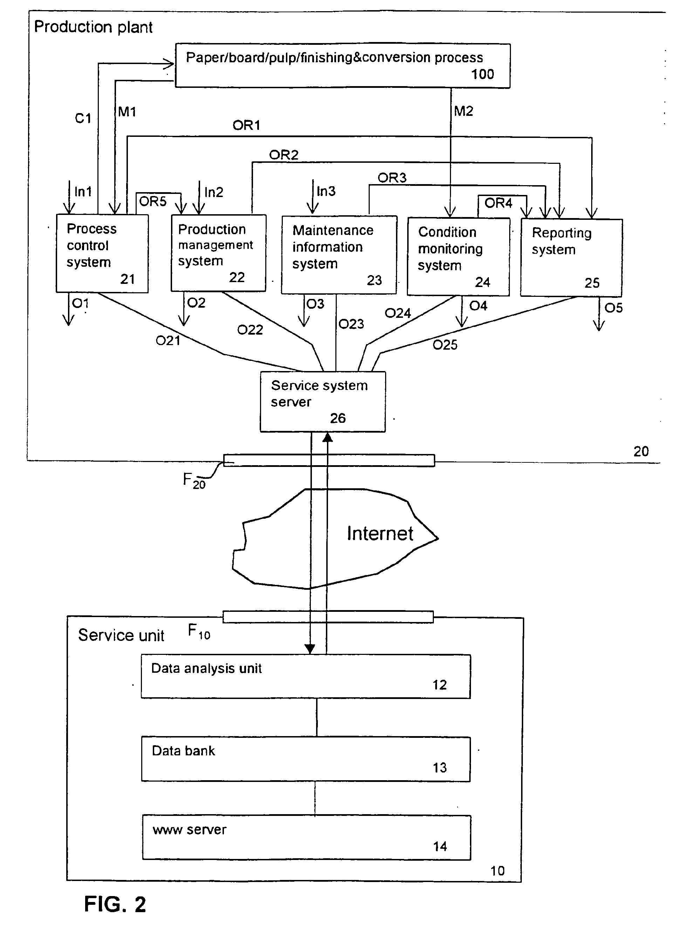

In FIG. 2 is shown an exemple of a maintenance arrangement in which a protected and secured communications connection is established between the production plant 20 and the service unit 10. Data 021, 022, 023, 024, 025 from the information systems 21, 22, 23, 24, 25 of the production plant 20 is gathered to a service system server 26 wherein the gathered data is treated and processed into a format essentially needed in servicing operations.

In the following, the operating principles and information transfer of the information systems 21, 22, 23, 24, 25 of the production plant 20 are described in more detail. The functions of a paper/board/pulp/finishing/conversion process 100 are controlled by a process control system 21. As input data In1, the process control system 21 receives desired target values of such variables as product quality and raw material/chemicals consumption, among others. To the process control system, measurement data M1 is gathered from the process machinery 100 and, on the basis of the measurement data M1, takes place the process control C1. The input information In2 of the production management system 22 comprises such data as specifications of ordered products and information OR5 is passed to it from the process control system 21, whereby the process control system 21 also receives information back from the production management system 22. The maintenance information system contains data on spare parts inventory, for instance. The function of the machinery condition monitoring system 24 is to log process parameters (M2) that are vital to the flawless function of the process including vibrations, circulating lubrication oil system, bearings, cleanliness of fabrics and other parameters of the process machinery 100. The process control system 21, the production management system 22, the maintenance information system 23 and the machinery condition monitoring system 24 submit information OR1, OR1, OR3, OR4 to the reporting system 25 that processes the received data into different types of reports OR5 properly formatted chronologically, statistically and in other manners. Each subunit 21, 22, 23, 24, 25 of the information system may also be accessed separately for relevant information (01, 02, 03, 04).

To the service system server 26 is collected only such data to which access is authorized by the client, that is, the production plant. In other words, not all the subsystems 21, 22, 23, 24, 25 of the information system and/or the information contained and/or produced by the subsystems 21, 22, 23, 24, 25 need not necessarily be accessible by the service system server 26. Hence, information transfer between the subsystems 21, 22, 23, 24, 25 and the service system server 26 may be arranged to occur in a selective manner and to a predetermined extent. For instance, information transfer may take place only from the maintenance information system 23, whereby the data on the need for spare parts, as well as on the availability of spare parts, are accessible to both of the parties, or, alternatively, from the process control system 21, whereby control of the process may be carried out from the remotely located service unit 10. The service system server 26 provides a standard interface for information transfer to the use of the service unit. The service system server 26 is integrated into the information network of the production plant 20 and is located within the confines of a firewall F₂₀ of said local information network of the production plant 20.

From the service system server 26, the information is transferred via the firewall F₂₀ into the Internet utilizing, e.g., commercially available data transfer facilities (DataNet, LanLink), and therefrom further to the service unit 10. Thus, a secured connection is established by means of such data transfer facilities between firewalls F₁₀ and F₂₀. Data security is assured by identification of the IP addresses of the communicating computers and through the use of passwords and other authorization methods such as data transmission encryption. The thus formed communications connection over the Internet gives a possibility of transferring large amounts of information with high data security. The information may contain, e.g., data, video and/or audio signals.

The information transferred from the production plant is processed in the data analysis unit 12 of the service unit 10 and the analyzed data is stored in a data bank 13. From the service unit 10, the data is transferred back to the service system server 26 located at the production plant over the secured communications connection. Herein, the data transmission may be complemented with other type of information transfer such as video or voice transmission. Resultingly, effective tools are provided for processing fault information concerning a machinery malfunction situation and issuing instructions to the production plant 20. At the production plant 20, the information stored in the data bank 13 of the service unit 10 may be utilized by reading the stored data with the help of a www browser, for instance. However, each client is authorized to full access only to the data related to his own production plant, complemented with anonymous reference data collected from other production plants. Access to the information is locked behind the use of ID codes and passwords.

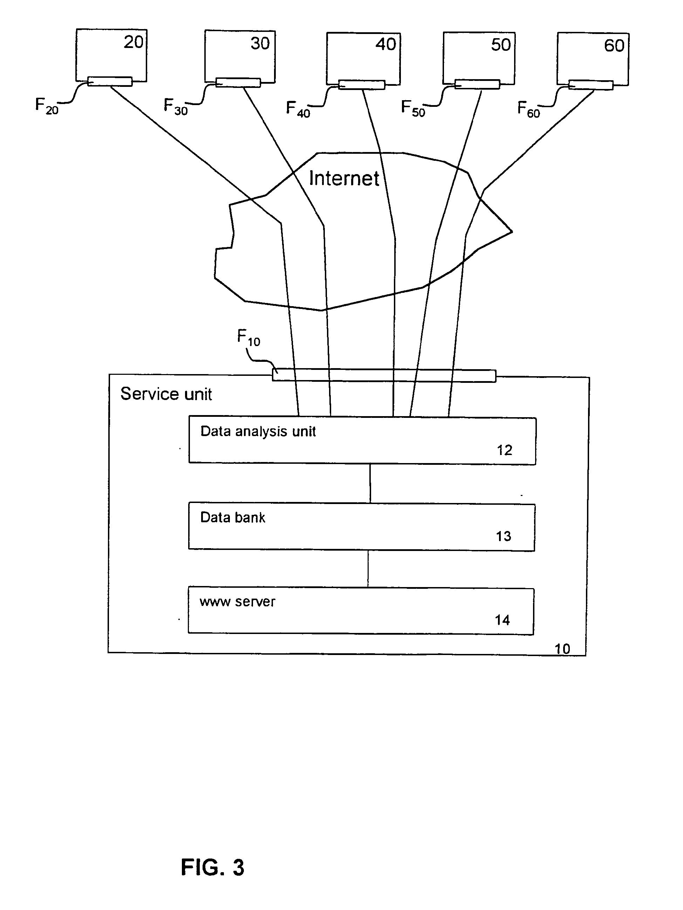

In FIG. 3 is shown a service unit 10 having by way of example a secured communications connection to a plurality of production plants 20, 30, 40, 50, 60. The communications connection from the service unit 10 to each one of the production plants 20, 30, 40, 50, 60 is established in accordance with the invention via a firewall F₁₀ of the service unit 10 to production plant 20 via its firewall F₂₀, to production plant 30 via its firewall F₃₀, to production plant 40 via its firewall F₄₀, to production plant 50 via its firewall F₅₀ and to production plant 60 via its firewall F₆₀. The number of production plants connected to the service unit 10 in accordance with the invention may obviously be varied substantially from that given herein by way of example.

The operation of the service unit 10 may be complemented with an expert group manned by specialists well skilled in the functions of the production plant 20. Obviously, the thus formed expert group can serve a plurality of client production mills and plants that may be located globally anywhere, whereby very quick responses to situations related to servicing and maintenance can be assured. This approach provides significant cost savings, since now not all malfunction situations need any more an expert to attend the plant site for solving a problem. On the other hand, the collected data may be utilized as prognostic information in the planning of service operations, whereby the preparations of the planned service call are carried out in a more efficient manner.

Moreover, the experts of the service unit 10 can also give assistance to the local service personnel of the production plants 20, 30, 40, 50, 60. The service unit 10 can initiate measurements in the production plant, perform remote diagnostics and give adjustment recommendations to the production plant personnel. Video and voice transmission over the communications connection assures efficient information transfer between production plant personnel and the service unit personnel.

In the above-described exemplifying embodiments, the production plant 20, 30, 40, 50, 60 may be, e.g., a paper mill, board mill, pulp production plant, paper finishing plant and the like installation related to the manufacture/conversion of paper/board or some other kind of production plant.

## Claims

1. A method for arranging the maintenance of at least one production plant (20, 30, 40, 50) such as a paper mill, board mill, pulp production plant, paper finishing plant and the like related to the manufacture/conversion of paper/board, the method comprising steps of:
- gathering information related to the manufacturing processes and machinery of the or each production plant by means of a local internal plant information system comprising the following subsystems supervising and controlling the production plant:
- a process control system (21),
- a production management system (22),
- a maintenance information system (23),
- a machinery condition monitoring system (24), and
- a reporting system (25) to which information is submitted from the subsystems (21, 22, 23, 24),
whereby the subsystems (21, 22, 23, 24, 25) of the or each production plant (20, 30, 40, 50) are connected to an associated local internal plant information network;
- at the or each production plant (20, 30, 40, 50), connecting a local plant service system server (26) to the local internal plant information network;
- using the local plant service system server (26) of the or each production plant (20, 30, 40, 50) to collect, via the local plant internal information network, information emanating from the subsystems (21, 22, 23, 24, 25);
- from the or each local plant service system server (26), sending said collected information to a single remote service unit (10) via the Internet, wherein the information received from the or each production plant (20, 30, 40, 50) is collected and analyzed by the single remote service unit;
- isolating the local internal plant information network of the or each production plant (20, 30, 40, 50) from the Internet by means of a firewall (F20, F30, F40, F50) situated between the local plant service system server (26) and the Internet;
- isolating an information network of the single remote service unit (10) from the Internet by means of a firewall (F10); and
- transferring information bidirectionally between the local internal plant information network of the or each production plant (20, 30, 40, 50) and the information network of the single remote service unit (10) via the firewalls (F10, F20) and the Internet in a secured format,
- wherein the subsystems (21, 22, 23, 24, 25) provide information to the local plant service system server (26) via the local internal plant information network in a selective manner and to an extent controlled by the single remote service unit (10).

2. The method of claim 1, wherein in the local plant service system server (26) the gathered data is treated and processed into a format essentially needed in servicing operations.

3. The method of claim 1 or 2, wherein authorized users in the single remote service unit (10) and the or each production plant (20; 30, 40, 50) are identified by IP addresses of computers between which a communications connection is to be established, and/or by ID codes and/or passwords of the computer operators.

4. The method according to any one of the preceding claims, wherein the local plant service system server (26) sends information to the single remote service unit (10) in a standard format.

5. The method according to any one of the preceding claims, wherein operational recommendations are sent from the single remote service unit (10) to the or each production plant (20, 30, 40, 50).

6. The method according to any one of the preceding claims, wherein information analyzed in the single remote service unit (10) is utilized for determining the timing of scheduled maintenance in the subsystems of the or each production plant (20, 30, 40, 50).

7. The method according to any one of the preceding claims, wherein data, video and/or audio signals are transferred between the or each production plant (20, 30, 40, 50) and the single remote service unit (10).

8. A system for arranging the maintenance of a production plant (20), the system including a local internal plant information system (21, 22, 23, 24, 25) for transferring information to a local plant service system server (26) and further including a remote service unit (10) comprising a data analysis unit (12) and a data bank (13), whereby the system further comprises a firewall (F20) located at said production plant (20) and a firewall (F10) located at the remote service unit (10), wherein the system enables the establishment of a secured communications connection, via the two firewalls (F10, F20), between the production plant (20) and the remote service unit (10), and wherein the local internal plant information system comprises the following subsystems for supervising and controlling the production plant (20):
- a process control system (21),
- a production management system (22),
- a maintenance information system (23),
- a machinery condition monitoring system (24), and
- a reporting system (25) to which information is submitted from the subsystems (21, 22, 23, 24),
wherein the subsystems (21, 22, 23, 24, 25) are arranged to provide information to the local plant service system server (26) via the local internal plant information network in a selective manner and to an extent controlled by the single remote service unit (10).

9. The system of claim 8, wherein the local plant service system server (26) is integrated into a local internal plant information network of the production plant (20).

10. The system according to claim 8 or 9, wherein the local plant service system server (26) is located within the confines of the firewall (F20) of the production plant (20).

11. The system according to any one of claims 8 to 10, wherein the local plant service system server (26) is arranged to treat and process gathered data into a format essentially needed in servicing operations.

12. The system according to any one of claims 8 to 11, wherein the remote service unit (10) operates over the secured communications connection with at least one production plant (20, 30, 40, 50), each one of them being isolated from an Internet by means of a firewall (F20, F30, F40, F50).

13. The system according to any one of claims 8 to 12, wherein the data analysis unit (12) is arranged to perform data processing and analysis, and wherein the data bank (13) is connected to the data analysis unit (12) for data storage.

14. The system according to any one of claims 8 to 13, wherein the data bank (13) of the remote service unit (10) is provided with a www interface for browsing of information.

## Patentansprüche

1. Verfahren zum Arrangieren der Instandhaltung zumindest einer Produktionsanlage (20, 30, 40, 50), wie einer Papierfabrik, einer Kartonagenfabrik, einer Zellstoffproduktionsfabrik, einer Papierveredelungsfabrik und dergleichen, die sich auf die Herstellung/Weiterverarbeitung von Papier/Kartonagen bezieht, wobei das Verfahren die Schritte umfasst:
- Sammeln von auf die Herstellungsprozesse und Maschinerie der oder jeder Produktionsanlage bezogenen Informationen mittels eines lokalen internen Anlageninformationssystems, das die folgenden die Produktionsanlage beaufsichtigenden und steuernden Subsysteme umfasst:
- ein Prozesssteuersystem (21),
- ein Produktionsverwaltungssystem (22),
- ein Instandhaltungsinformationssystem (23),
- ein Maschineriezustandsüberwachungssystem (24), und
- ein Berichtssystem (25), zu dem Informationen von den Subsystemen (21, 22, 23, 24) geleitet werden,
wobei die Subsysteme (21, 22, 23, 24, 25) der oder jeder Produktionsanlage (20, 30, 40, 50) mit einem assoziierten lokalen internen Anlageninformationsnetzwerk verbunden sind,
- Verbinden, bei der oder jeder Produktionsanlage (20, 30, 40, 50), eines lokalen Anlagendienstsystemservers (26) mit dem lokalen internen Anlageninformationsnetzwerk,
- Verwenden des lokalen Anlagendienstsystemservers (26) der oder jeder Produktionsanlage (20, 30, 40, 50) zum Sammeln von aus den Subsystemen (21, 22, 23, 24, 25) hervorgehenden Informationen mittels des lokalen internen Anlageninformationsnetzwerks,
- Senden der gesammelten Informationen zu einer einzelnen entfernten Serviceeinheit (10) von dem oder jedem lokalen Anlagendienstsystemserver (26) über das Internet,
wobei die von der oder jeder Produktionsanlage (20, 30, 40, 50) empfangenen Informationen durch die einzelne entfernte Serviceeinheit gesammelt und analysiert werden,
- Isolieren des lokalen internen Anlageninformationsnetzwerks der oder jeder Produktionsanlage (20, 30, 40, 50) von dem Internet mittels einer Firewall (F20, F30, F40, F50), die zwischen dem lokalen Anlagendienstsystemserver (26) und dem Internet angeordnet ist,
- Isolieren eines Informationsnetzwerks der einzelnen entfernten Serviceeinheit (10) von dem Internet mittels einer Firewall (F10), und
- bidirektionales Übermitteln von Informationen zwischen dem lokalen internen Anlageninformationsnetzwerk der oder jeder Produktionsanlage (20, 30, 40, 50) und dem Informationsnetzwerk der einzelnen entfernten Serviceeinheit (10) über die Firewalls (F10, F20) und das Internet in einem gesicherten Format,
- wobei die Subsysteme (21, 22, 23, 24, 25) dem lokalen Anlagendienstsystemserver (26) Informationen mittels des lokalen internen Anlageninformationsnetzwerks auf eine selektive Weise und bis zu einem durch die einzelne entfernte Serviceeinheit (10) gesteuerten Ausmaß bereitstellen.

2. Verfahren gemäß Anspruch 1, wobei in dem lokalen Anlagendienstsystemserver (26) die gesammelten Daten behandelt und zu einem bei Dienstbetrieben essentiell erforderlichen Format verarbeitet werden.

3. Verfahren gemäß Anspruch 1 oder 2, wobei autorisierte Benutzer in der einzelnen entfernten Serviceeinheit (10) und der oder jeder Produktionsanlage (20, 30, 40, 50) durch IP-Adressen von Computern, zwischen denen eine Kommunikationsverbindung aufzubauen ist, und/oder durch ID-Codes und/oder Passworte der Computeroperatoren identifiziert werden.

4. Verfahren gemäß einem der vorstehenden Ansprüche, wobei der lokale Anlagendienstsystemserver (26) Informationen zu der einzelnen entfernten Serviceeinheit (10) in einem Standardformat sendet.

5. Verfahren gemäß einem der vorstehenden Ansprüche, wobei betriebliche Empfehlungen von der einzelnen entfernten Serviceeinheit (10) zu der oder jeder Produktionsanlage (20, 30, 40, 50) gesendet werden.

6. Verfahren gemäß einem der vorstehenden Ansprüche, wobei in der einzelnen entfernten Serviceeinheit (10) analysierten Informationen zur Bestimmung der Zeitgabe einer geplanten Instandhaltung in den Subsystemen der oder jeder Produktionsanlage (20, 30, 40, 50) verwendet werden.

7. Verfahren gemäß einem der vorstehenden Ansprüche, wobei Daten-, Video- und/oder Audiosignale zwischen der oder jeder Produktionsanlage (20, 30, 40, 50) und der einzelnen entfernten Serviceeinheit (10) übermittelt werden.

8. System zum Arrangieren der Instandhaltung einer Produktionsanlage (20), wobei das System ein lokales internes Anlageninformationssystem (21, 22, 23, 24, 25) zum Übermitteln von Informationen zu einem lokalen Anlagendienstsystemserver (26) enthält und ferner eine entfernte Serviceeinheit (10), die eine Datenanalyseeinheit (12) und eine Datenbank (13) umfasst, enthält, wobei das System ferner eine bei der Produktionsanlage (20) angeordnete Firewall (F20) und eine bei der entfernten Serviceeinheit (10) angeordnete Firewall (F10) umfasst, wobei das System den Aufbau einer gesicherten Kommunikationsverbindung über die zwei Firewalls (F10, F20) zwischen der Produktionsanlage (20) und der entfernten Serviceeinheit (10) ermöglicht, und wobei das lokale interne Anlageninformationssystem die folgenden Subsysteme zur Beaufsichtigung und Steuerung der Produktionsanlage (20) umfasst:
- ein Prozesssteuersystem (21),
- ein Produktionsverwaltungssystem (22),
- ein Instandhaltungsinformationssystem (23),
- ein Maschineriezustandsüberwachungssystem (24), und
- ein Berichtssystem (25), zu dem Informationen von den Subsystemen (21, 22, 23, 24) geleitet werden,
wobei die Subsysteme (21, 22, 23, 24, 25) eingerichtet sind, dem lokalen Anlagendienstsystemserver (26) Informationen mittels des lokalen internen Anlageninformationsnetzwerks auf eine selektive Weise und bis zu einem durch die einzelne entfernte Serviceeinheit (10) gesteuerten Ausmaß bereitzustellen.

9. System gemäß Anspruch 8, wobei der lokale Anlagendienstsystemserver (26) in ein lokales internes Anlageninformationsnetzwerk der Produktionsanlage (20) integriert ist.

10. System gemäß Anspruch 8 oder 9, wobei der lokale Anlagendienstsystemserver (26) innerhalb der Abgrenzungen der Firewall (F20) der Produktionsanlage (20) angeordnet ist.

11. System gemäß einem der Ansprüche 8 bis 10, wobei der lokale Anlagendienstsystemserver (26) zum Behandeln und Verarbeiten der gesammelten Daten zu einem bei Dienstbetrieben essentiell erforderlichen Format eingerichtet ist.

12. System gemäß einem der Ansprüche 8 bis 11, wobei die entfernte Serviceeinheit (10) über die gesicherte Kommunikationsverbindung mit zumindest einer Produktionsanlage (20, 30, 40, 50) funktioniert, wobei jedes von diesen mittels einer Firewall (F20, F30, F40, F50) von dem Internet isoliert ist.

13. System gemäß einem der Ansprüche 8 bis 12, wobei die Datenanalyseeinheit (12) zur Durchführung einer Datenverarbeitung und -analyse eingerichtet ist, und wobei die Datenbank (13) mit der Datenanalyseeinheit (12) zur Datenspeicherung verbunden ist.

14. System gemäß einem der Ansprüche 8 bis 13, wobei die Datenbank (13) der entfernten Serviceeinheit (10) mit einer www-Schnittstelle zum Durchsuchen von Informationen versehen ist.

## Revendications

1. Procédé destiné à l'agencement de la maintenance d'au moins une installation de production (20, 30, 40, 50) tel qu'une papeterie, une cartonnerie, une installation de production de pâte à papier, une installation de finition de papier et analogues en rapport avec la fabrication/ conversion de papier/carton, le procédé comprenant les étapes consistant à :
- rassembler des informations concernant le traitement de fabrication et les machines des installations ou de chaque installation de production au moyen d'un système d'information interne local comprenant les sous-systèmes suivants de supervision et de contrôle de l'installation de production :
- un système (21) de contrôle du traitement,
- un système (22) de gestion de production,
- un système (23) d'informations de maintenance,
- un système (24) de surveillance d'état de machine, et
- un système (25) d'alerte auquel sont soumises les informations provenant des sous-systèmes (21, 22, 23, 24),
les sous-systèmes (21, 22, 23, 24, 25) de l'installation de chaque installation de production (20, 30, 40, 50) étant connectés à un réseau d'information d'installation interne local associé ;
- au niveau de l'installation ou de chaque installation de production (20, 30, 40, 50), connecter un serveur (26) de système de service d'installation local au réseau d'information d'installation interne local ;
- utiliser le serveur (26) de système de service d'installation local de l'installation ou de chaque installation de production (20, 30, 40, 50) pour collecter, par le biais du réseau d'information d'installation interne local des informations provenant des sous-systèmes (21, 22, 23, 24, 25) ;
- depuis le serveur ou chaque serveur (26) de système de service d'installation local, envoyer lesdites informations collectées vers une unité (10) de service unique à distance par le biais de l'Internet, dans lequel les informations reçues depuis la ou chaque installation de production (20, 30, 40, 50) sont collectées et analysées par l'unité de service unique à distance ;
- isoler le réseau d'information d'installation interne local de la ou de chaque installation de production (20, 30, 40, 50) de l'Internet au moyen d'un pare-feu (F20, F30, F40, F50) situé entre le serveur (26) de système de service d'installation local et l'Internet ;
- isoler un réseau d'information de l'unité (10) de service unique à distance de l'Internet au moyen d'un pare-feu (F10) et
- transférer des informations de manière bidirectionnelle entre le réseau d'information d'installation interne local de la ou de chaque installation de production (20, 30, 40, 50) et le réseau d'information de l'unité (10) de service unique à distance par le biais de pare-feu (F10, F20) et de l'Internet sous un format sécurisé,
- dans lequel les sous-systèmes (21, 22, 23, 24, 25) fournissent des informations auprès du serveur (26) de système de service d'installation local par le biais du réseau d'information d'installation interne local de manière sélective et commandé dans une certaine mesure par l'unité (10) de service unique à distance.

2. Procédé selon la revendication 1, dans lequel, dans le serveur (26) de système de service d'installation local, les données rassemblées sont examinées et traitées dans un format essentiellement nécessaire à des opérations d'entretien.

3. Procédé selon la revendication 1 ou 2, dans lequel les utilisateurs autorisés dans l'unité (10) de service unique à distance et la ou chaque installation de production (20, 30, 40, 50) sont identifiées par des adresse IP d'ordinateurs entre lesquelles une connexion de communications sera établie, et/ou par des codes d'identification et/ou des mots de passe des opérateurs d'ordinateur.

4. Procédé selon l'une quelconque des revendications précédentes, dans lequel le serveur (26) de système de service d'installation local envoie des informations vers l'unité (10) de service unique à distance dans un format standard.

5. Procédé selon l'une quelconque des revendications précédentes, dans lequel des recommandations fonctionnelles sont envoyées depuis l'unité (10) de service unique à distance vers la ou chaque installation de production (20, 30, 40, 50).

6. Procédé selon l'une quelconque des revendications précédentes, dans lequel des informations analysées dans l'unité (10) de service unique à distance sont utilisées pour déterminer le calendrier de maintenance préventive dans les sous-systèmes de la ou chaque installation de production (20, 30, 40, 50).

7. Procédé selon l'une quelconque des revendications précédentes, dans lequel des données, des signaux vidéo et/ou audio sont transférés entre la ou chaque installation de production (20, 30, 40, 50) et l'unité (10) de service unique à distance.

8. Système destiné à l'agencement de la maintenance d'une installation de production (20), le système comportant un système (21, 22, 23, 24, 25) d'information d'installation interne local destiné à transférer des informations vers un serveur (26) de système de service d'installation local et comportant en outre une unité (10) de service à distance comprenant une unité (12) d'analyse de données et une banque (13) de données, le système comprenant en outre un pare-feu (F20) placé au niveau de ladite installation de production (20) et un pare-feu (F10) placé au niveau de l'unité (10) de service à distance, dans lequel le système permet d'établir une connexion de communications sécurisées, par le biais de deux pare-feu (F10, F20), entre l'installation de production (20) et l'unité (10) de service à distance, et dans lequel le système d'information d'installation interne local comprend les sous-systèmes suivants destinés à superviser et contrôler l'installation de production (20) :
- un système (21) de contrôle de traitement,
- un système (22) de gestion de production,
- un système (23) d'information de maintenance,
- un système (24) de surveillance d'état de machine, et
- un système (25) d'alerte auquel sont soumises les informations provenant des sous-systèmes (21, 22, 23, 24),
dans lequel les sous systèmes (21, 22, 23, 24, 25) sont agencés afin de mettre à disposition des informations auprès du serveur (26) de système de service d'installation local par le biais du réseau d'information d'installation interne local de manière sélective et commandé dans une certaine mesure par l'unité (10) de service unique à distance.

9. Système selon la revendication 8, dans lequel le serveur (26) de système de service d'installation local est intégré dans le réseau d'information d'installation interne local de l'installation de production (20).

10. Système selon la revendication 8 ou 9, dans lequel le serveur (26) de système de service d'installation local est placé à l'intérieur de limites définies par le pare-feu (F20) de l'installation de production (20).

11. Système selon l'une quelconque des revendications 8 à 10, dans lequel le serveur (26) de système de service d'installation local est agencé pour examiner et traiter des données rassemblées dans un format essentiellement nécessaire à des opérations d'entretien.

12. Système selon l'une quelconque des revendications 8 à 11, dans lequel l'unité (10) de service à distance fonctionne par-dessus la connexion de communications sécurisée avec au moins une installation de production (20, 30, 40, 50), chacune d'entre elles étant isolée de l'Internet au moyen d'un pare-feu (F20, F30, F40, F50).

13. Système selon l'une quelconque des revendications 8 à 12, dans lequel l'unité (12) d'analyse de données est agencée pour réaliser un traitement et une analyse des données, et dans lequel la bande de données (13) est connectée à l'unité (12) d'analyse des données pour une mémorisation des données.

14. Système selon l'une quelconque des revendications 8 à 13, dans lequel la banque (13) de données de l'unité (10) de service à distance est prévue avec une interface Web afin de pouvoir naviguer à la recherche d'informations.
